# EUROPEAN PATENT APPLICATION

(11) **EP 1 657 855 A1**
(43) Date of publication of application: **17.05.2006**
(21) Application number: 05022271.0
(22) Date of filing: 12.10.2005
(51) Int. Cl.: H04L 12/28

(54) **System and method for setting up a peripheral device for use in a wireless network**

(30) Priority: 12.11.2004 US 987112
(71) Applicant: Hewlett-Packard Development Company, L.P., Houston, TX 77070 (US)
(72) Inventor: Evert, Matthew, James, San Diego CA 92129 (US); Hatcher, John, Mark, San Diego CA 9212666 (US); Breidenbach, Steven, T., San Diego CA 92128 (US)
(74) Representative: Schoppe, Fritz

(57) **Abstract**

In one embodiment, a method includes automatically identifying available wireless networks to a user to enable the user to select a network to which to connect the peripheral device (302), automatically determining a type of encryption, if any, used on a selected wireless network (306), prompting the user to enter an appropriate pass code that complies with the determined type of encryption (306), and attempting to connect the peripheral device to the selected wireless network before the user exits the set up procedure (310).

## Description

### BACKGROUND

Many devices are configured for wireless communications. Recently, peripheral devices have been developed that are capable of wirelessly communicating. For example, printing devices have been developed that are configured to receive print data via wireless networks. In such a scenario, the printing device may communicate with the host device directly or via an appropriate access point, such as a wireless router.

Before a peripheral device can be used on a wireless network, the device must be set up for such use. That process typically entails identifying the network to which the device is to connect and providing any security information, such as an encryption pass code, that is necessary to access the network.

In current set up procedures, a software program that resides on the customers personal computer (PC) is used to configure the peripheral device for use on the wireless network. Given that the PC cannot wirelessly communicate with the peripheral device until the device has been set up for such communication, that procedure requires the customer to connect the peripheral device to the PC or to a wired network to which the PC is connected so that the set up information can be provided to the peripheral device.

The above-described procedure is disadvantageous for several reasons. First, requiring the customer to connect a communications cable to the peripheral device creates confusion for many customers who do not understand why a "wire" is required to enable "wireless" communication. Second, the procedure is relatively complex and, therefore, the customer must be relatively skilled in network technology to be able to successfully set up the peripheral device. Specifically, little or no assistance is provided to the customer in terms of identifying the wireless network or the type of encryption that the network uses.

From the above, it can be appreciated that it would be desirable to provide a simplified procedure for setting up a peripheral device for use on a wireless network.

### SUMMARY

Disclosed are systems and method for setting up a peripheral device for use on a wireless network. In one embodiment, a method includes automatically identifying available wireless networks to a user to enable the user to select a network to which to connect the peripheral device, automatically determining a type of encryption, if any, used on a selected wireless network, prompting the user to enter an appropriate pass code that complies with the determined type of encryption, and attempting to connect the peripheral device to the selected wireless network before the user exits the set up procedure.

### BRIEF DESCRIPTION OF THE DRAWINGS

The disclosed systems and methods can be better understood with reference to the following drawings. The components in the drawings are not necessarily to scale.
FIG. 1 is a schematic view of an embodiment of a system with which a peripheral device can be set up for use on a wireless network.
FIG. 2 is a block diagram of an embodiment of a peripheral device shown in FIG. 1.
FIG. 3 is a flow diagram that illustrates an embodiment of a method for setting up a peripheral device for use on a wireless network.
FIGS. 4A-4E provide a flow diagram that illustrates an embodiment of operation of a wireless setup system shown in FIG. 3.
FIG. 5 is a flow diagram that illustrates a further embodiment of operation of a wireless setup system shown in FIG. 3.

### DETAILED DESCRIPTION

As is described above, existing procedures for setting up a peripheral device for use on a wireless network are confusing and/or too complex for customers who are not skilled in wireless network technology. As is described in the following, however, such confusion can be reduced and the set up procedure simplified for such customers by providing an onboard wireless setup system on the peripheral device that walks the customer through the set up process and, at least partially, automates the process for the customer. With such a procedure, the customer need not connect a cable to the peripheral device, and need not understand as much about wireless networks and connecting devices to such networks. Therefore, relatively unsophisticated customers can successfully connect their peripheral devices to their network with less frustration and less reliance on customer support provided by the peripheral device manufacturer.

Disclosed herein are embodiments of systems and methods for setting up a peripheral device for use on a wireless network. Although particular embodiments are disclosed, these embodiments are provided for purposes of example only to facilitate description of the disclosed systems and methods.

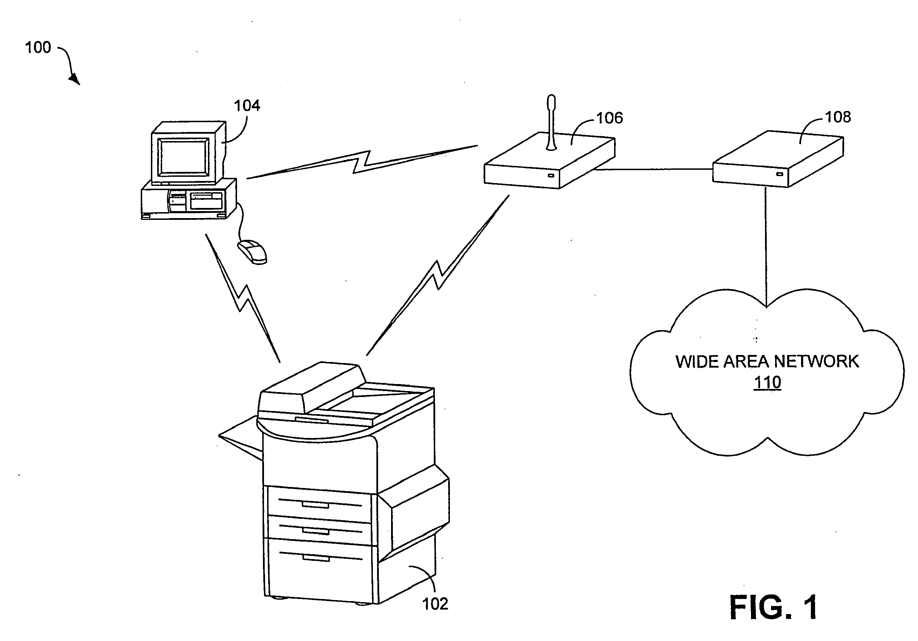

Referring now in more detail to the drawings, in which like numerals indicate corresponding parts throughout the several views, FIG. 1 illustrates an example system 100. As indicated in that figure, the system 100 generally comprises a peripheral device 102 and a user computer 104 that can interact with the peripheral device. In the embodiment of FIG. 1, the peripheral device 102 is a printing device. For the remainder of the disclosure, the peripheral device 102 will be referred to as a printing device. The printing device 102 can comprise any device that is capable of printing hard copy documents. Therefore, the printing device 102 may, for example, comprise any of a printer, a photocopier, facsimile machine, multi-function peripheral (MFP) device that is capable of two or more of printing, copying, faxing, and emailing, and other such printing devices.

In the embodiment of FIG. 1, the user computer 104 comprises a personal computer (PC). Although a PC is illustrated in FIG. 1 and has been explicitly identified herein, the user computer 104 could comprise a different type of computer such as a notebook computer or a Macintosh™ type computer, or a handheld computer such as a personal digital assistant (PDA). More generally, the user computer 104 comprises any computing device that can communicate with the printing device 102, for instance by wirelessly sending print data (e.g., in the form of print jobs) to the device.

As is further indicated in FIG. 1, the printing device 102 is not connected to the user computer 104, or any other device for that matter, with a communication cable or other wire. Instead, the printing device 102 is configured (once it is properly set up) to wirelessly communicate with the user computer 104 and/or a wireless access point 106. For purposes of the present disclosure, communications between the printing device 102 and the computer 104 or access point 106 are communications over a wireless network. Such a network can be a wireless personal area network (WPAN) or a wireless local area network (WLAN) 110. Indeed, depending upon the nature of the access point 106, the network could comprise a wireless wide area network (WWAN).

In embodiments in which the wireless access point 106 is used, the access point comprises a wireless router that is configured to route wireless communications between devices, such as the user computer 104 and the printing device 102. By way of example, such communications may be via Institute of Electrical and Electronics Engineers (IEEE) 802.15 (e.g., Bluetooth™) or the family of standards that fall under IEEE 802.11 (commonly referred to as Wi-Fi).

In the embodiment of FIG. 1, the wireless access point 106 is connected to a network communication device 108, such as a digital subscriber line (DSL) or cable modem. The network communication device 108 is, in tum, connected to a wide area network (WAN) that, for example, comprises the Internet.

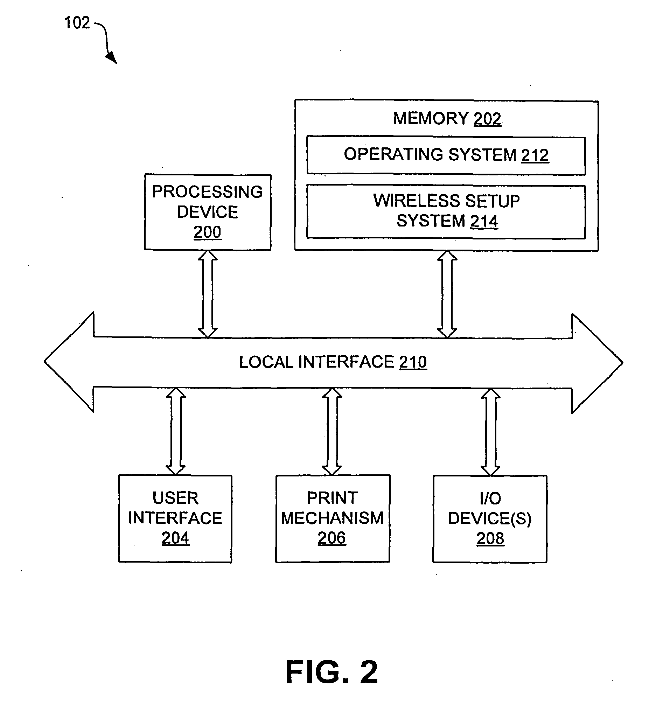

FIG. 2 is a block diagram illustrating an example architecture for the printing device 102 shown in FIG. 1. As is indicated in FIG. 2, the printing device 102 comprises a processing device 200, memory 202, a user interface 204, a print mechanism 206, and at least one input-output (I/O) device 208. Each of those components is connected to a local interface 210.

The processing device 200 is adapted to execute commands stored in memory 202 and can comprise a general-purpose processor, a microprocessor, one or more application-specific integrated circuits (ASICs), a plurality of suitably configured digital logic gates, and other well known electrical configurations comprised of discrete elements both individually and in various combinations to coordinate the overall operation of the printing device 102. The memory 202 comprises any one or a combination of volatile memory elements (e.g., random access memory (RAM)) and nonvolatile memory elements (e.g., read-only memory (ROM), Flash memory, hard disk, etc.).

The user interface 204 comprises the tools with which the user (e.g., customer) can set up the printing device 102 for wireless communications and can adjust device settings. By way of example, the user interface 204 comprises one or more function keys or buttons contained within a device control panel. Such a control panel further includes a display, such as a liquid crystal display (LCD) or light emitting diode (LED) display.

The print mechanism 206 includes the components that are used to perform printing. The particular nature of those components may vary depending upon the specific type of printing device 102 at issue. For example, if the printing device 102 is a laser printer, the print mechanism may comprise one or more of a photosensitive member, a charging apparatus, a laser scanner, a paper transport system, etc.

The one or more I/O devices 208 facilitate communications between the printing device 102 and other devices. These I/O devices 208 at least include a wireless (e.g., radio frequency (RF)) transceiver.

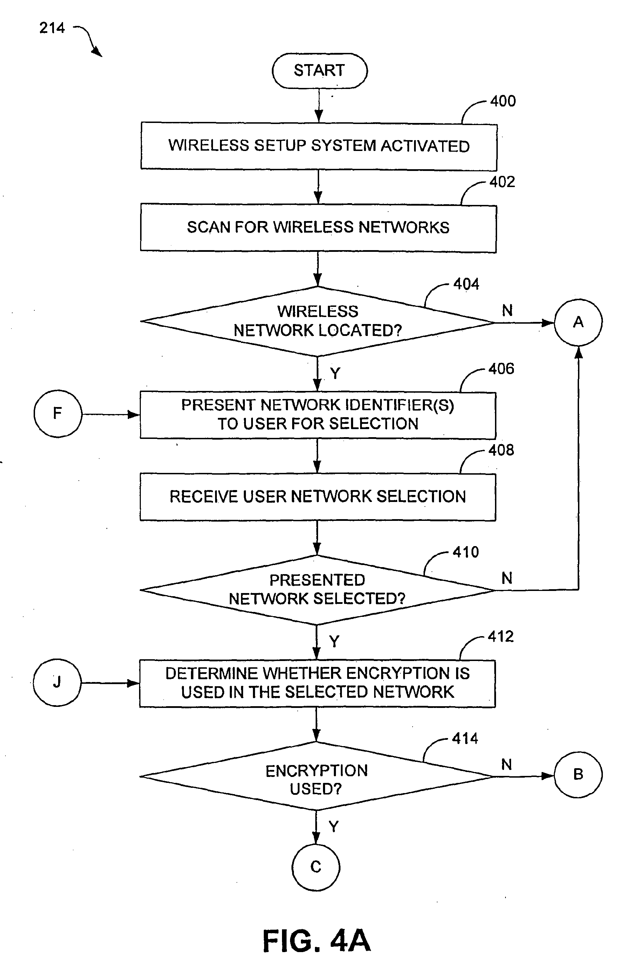

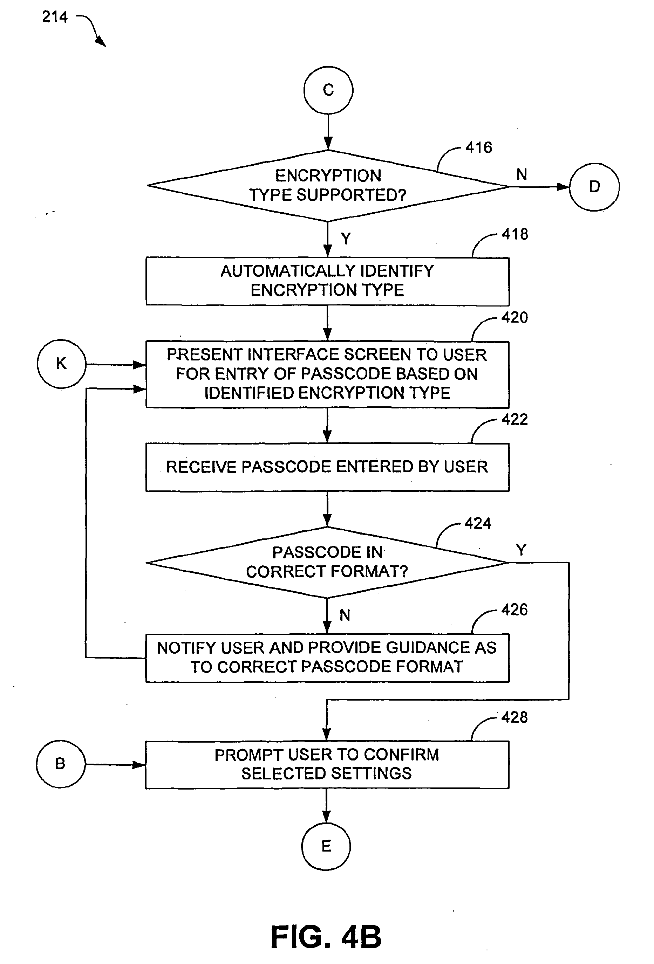

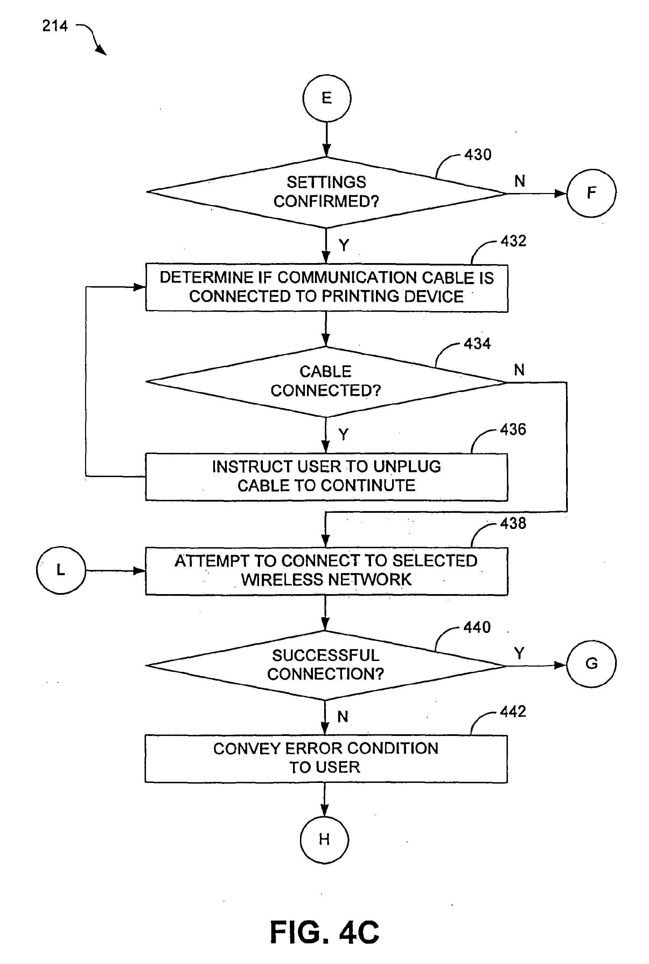

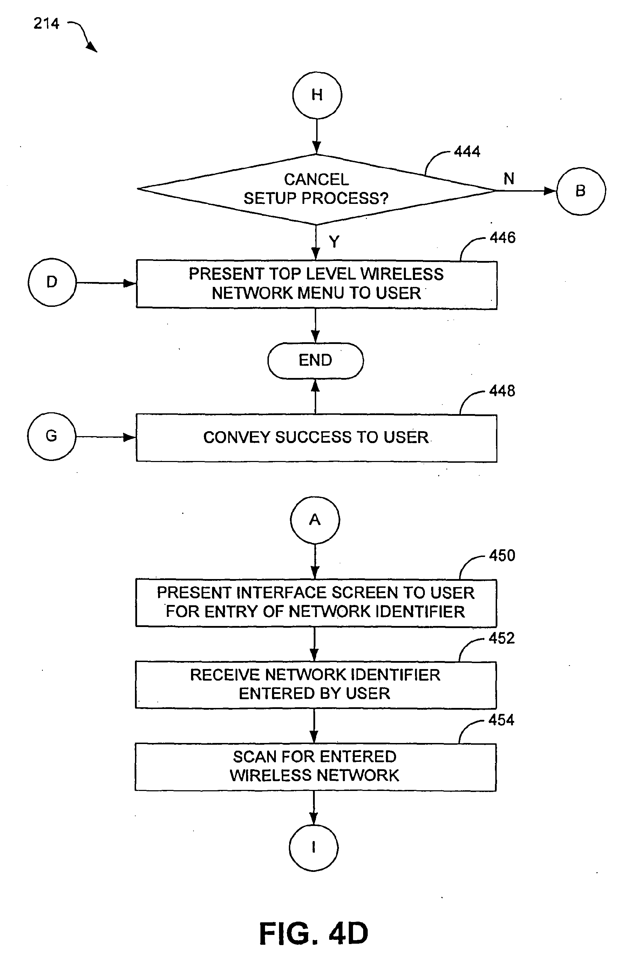

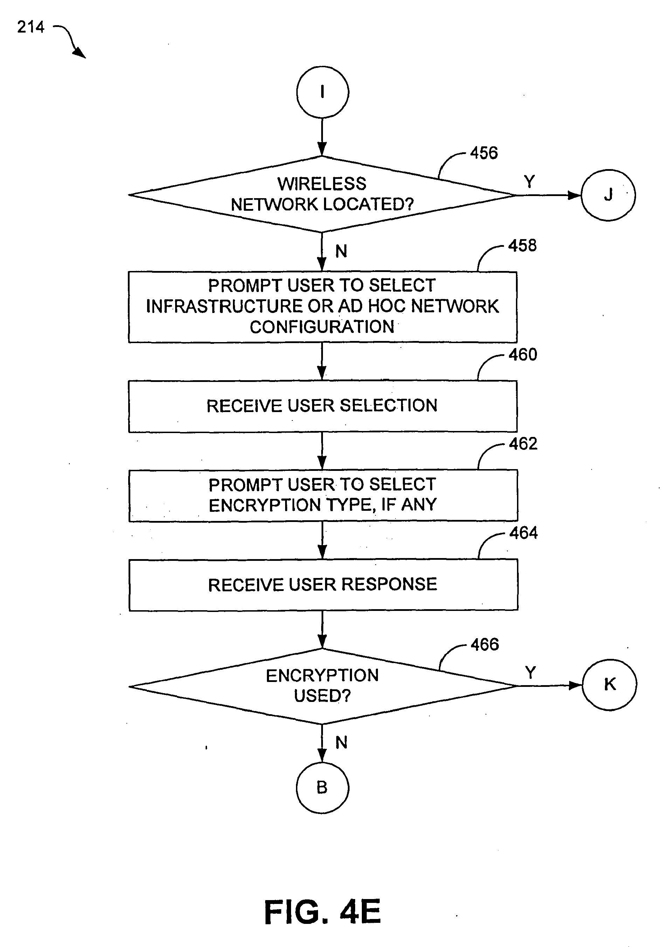

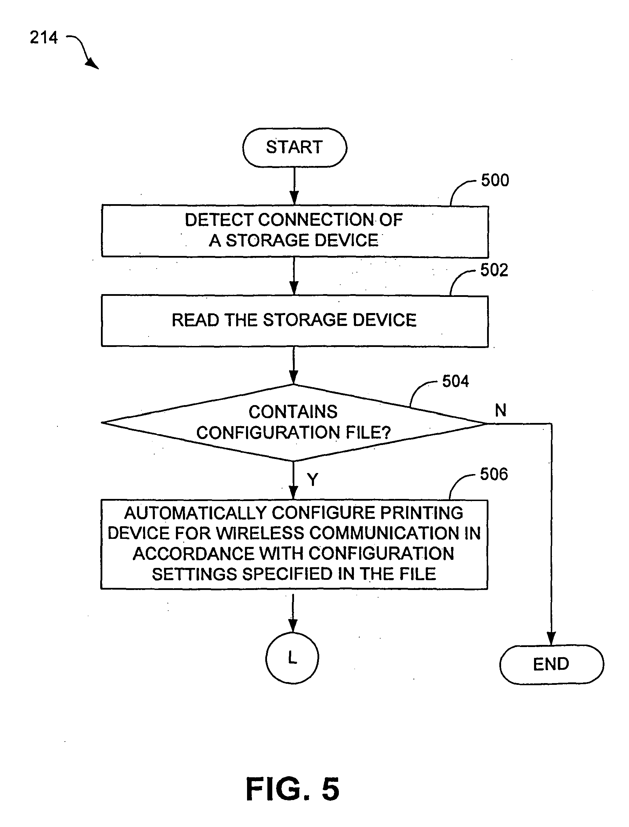

The memory 202 includes various programs including an operating system 212 and a wireless setup system 214 that is used to aid the user in setting up the printing device 102 for use on a wireless network. Given this functionality, the wireless setup system 214 may be referred to as a wireless setup "wizard." Operation of the wireless setup system 214 is discussed in greater detail in relation to FIGS. 4 and 5 below.

Various programs (i.e. logic) have been described herein. These programs can be stored on any computer-readable medium for use by or in connection with any computer-related system or method. In the context of this document, a computer-readable medium is an electronic, magnetic, optical, or other physical device or means that contains or stores a computer program for use by or in connection with a computer-related system or method. These programs can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

Example systems having been described above, operation of the systems will now be discussed. In the discussions that follow, flow diagrams are provided. Process steps or blocks in these flow diagrams may represent modules, segments, or portions of code that include one or more executable instructions for implementing specific logical functions or steps in the process. Although particular example process steps are described, alternative implementations are feasible. Moreover, steps may be executed out of order from that shown or discussed, including substantially concurrently or in reverse order, depending on the functionality involved.

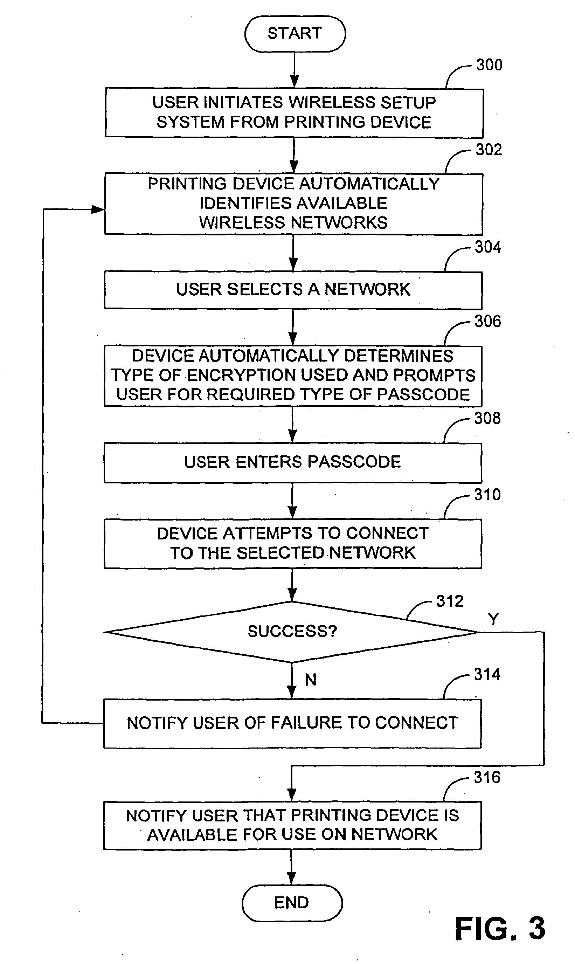

FIG. 3 provides an example method for setting up a peripheral device, such as printing device 102 (FIG. 1), for use on a wireless network. Beginning with block 300, the user (e.g., customer) initiates the wireless setup system 214 (FIG. 2) from the printing device 102. Such initiation can be achieved by, for example, selecting a "Wireless Setup Wizard" option from an appropriate menu displayed in the device's control panel display. Given that the wireless setup system 214 resides and executes on the printing device 102, no communication cable need be connected to the printing device, thereby reducing confusion for the user.

Once the wireless setup system 214 is initiated, the printing device 102 automatically identifies the available wireless networks, as indicated in block 302. As is described in greater detail below in relation to FIG. 4, this identification can comprise scanning for accessible wireless networks (i.e., wireless networks within range) and presenting those networks to the user for purposes of selection. In such a case, the printing device 102 automatically locates networks that may be a network to which the user would like to connect, thereby simplifying the set up process. The located networks can be identified using an appropriate identifier, such as a network name, to enable the user to simply select the correct network, as opposed to requiring the user to remember and manually enter the proper network name.

Next, with reference to block 304, the user selects a network. For example, the user selects the WPAN or WLAN that is defined within the user's home or office. Upon receiving that selection, the printing device 102 automatically determines the type of encryption used on the selected network (if any), and prompts the user for the required type of pass code (if any) used to access the network, as is indicated in block 306. As is described in greater detail below in relation to FIG. 4, that determination can comprise determining the encryption type from signals output from the wireless network (e.g., from the wireless access point). Through such determination, the printing device 102 "knows" the correct format of pass code used in the applicable encryption scheme and can therefore aid the user in entering a correct pass code, for instance by indicating to the user what type of pass code to enter and by confirming that the entered string is in the proper format.

Next, the user enters the pass code, as indicated in block 308, and the printing device 102 then attempts to connect to the selected network, as indicated in block 310. Because the printing device 102 attempts to connect to the wireless network prior to exiting the set up process, the user is provided with immediate feedback as to whether he or she has correctly set up the printing device. This avoids the situation in which the user only learns that the set up process was incorrectly performed when the user later attempts to communicate to the printing device 102 over the wireless network, at which time the user may be required to restart the set up process.

With reference to decision block 312, flow from this point depends upon whether connection to the network was successful or not. If so, flow continues down to block 316 described below. If not, however, flow continues to block 314 at which the printing device 102 notifies the user of the failure to connect. With such notification, the user knows that something is wrong and, therefore, knows not to exit the set up process. In the illustrated embodiment, flow can then return to block 302 at which the various located networks are again presented to the user for selection. Notably, flow could return to other points in the flow diagram of FIG. 3, or the user could elect to quit the set up process all together.

Returning to block 312, if connection was successful, flow continues to block 316 at which the printing device 102 notifies the user that the printing device is now available for use on the selected wireless network. At this point, flow for the set up session is terminated.

FIGS. 4A-4E provide a detailed example of an embodiment of operation of the wireless setup system 214 (FIG. 2) that resides on the printing device 102 (FIG. 1). Beginning with block 400 of FIG. 4A, the wireless setup system 214 is activated by the user. As is described above in relation to FIG. 3, such activation or initialization can be achieved by, for example, selecting a "Wireless Setup Wizard" option from an appropriate menu displayed in the printing device's control panel display.

Once activated, the wireless setup system 214 scans for wireless networks that are within range of the printing device 102, as indicated in block 402. By way of example, this process comprises receiving beacon signals emitted by one or more wireless networks and obtaining information about the network(s) from the signal(s). In such a case, beacon signals may be sent by and received from multiple wireless access points 106 and/or computers. For instance, if the user is setting up the printing device 102 for use on the user's home wireless network, the wireless setup system 214 may receive beacon signals from the wireless router of the user's network and one or more other beacon signals from one or more wireless networks of the user's neighbors.

With reference to decision block 404, if no wireless networks are located, flow continues to block 450 of FIG. 4D described below. If, on the other hand, one or more wireless networks are located, flow continues to block 406 at which the wireless setup system 214 presents one or more network identifiers to the user for selection. The network identifiers typically comprise names that distinguish each network from others. By way of example, the network identifiers comprise service set identifiers (SSIDs) that have been assigned to the various located networks. Such identifiers can be communicated to the wireless setup system 214 in the information contained in the beacon signals emitted by the networks.

The various identifiers can be presented to the user in an appropriate interface screen shown in the control panel display. For example, the identifiers can be simply provided in a list from which the user can chose the relevant (e.g., his or her own) network using the keys or buttons of the printing device control panel. In such a case, selection can be input by pressing one or more buttons until the desired network is highlighted or otherwise identified, and then pressing a "select" or "enter" button. Alternatively, when the control panel comprises a touch-sensitive screen, the user can simply press the desired network to select it. Irrespective of the manner in which the selection is entered, the wireless setup system 214 receives the user network selection, as indicated in block 408.

In cases in which the network that the user wishes to select was not located and, therefore, was not presented to the user for selection, the user's selection may not comprise a selection of a presented network. For instance, the user may select a "new" wireless network that was not located. Such a scenario may be occur if, for example, the desired network is configured such that no beacon signals are emitted (e.g., as a security measure). Therefore, with reference to decision block 410, if the user does not select a presented network, flow continues to block 450 of FIG. 4D, which is described below.

Assuming for the moment that the user selected a network that was located and therefore presented by the wireless setup system 214, flow continues to block 412 of FIG. 4A at which the system determines whether encryption is used in the selected network. By way of example, this determination is made from the information provided in the beacon signals that were received by the system 214. Referring to decision block 414, if no encryption is used in the wireless network that the user selected, flow continues to block 428 of FIG. 4B, which is described below. If, however, encryption is used, flow continues to decision block 416 of FIG. 4B at which the wireless setup system 214 determines whether the type of encryption is one that the system supports. If not, the printing device 102 cannot be used on the wireless network as long as the type of encryption used is active. In such a case, flow continues to block 446 of FIG. 4D at which the top level wireless network menu of the printing device 102 is presented to the user (e.g., the same menu from which the user activated the wireless setup system in block 400). At that point, flow for the current set up session is terminated.

Returning to block 416 of FIG. 4B, if the type of encryption associated with the selected wireless network is supported, flow continues to block 418 at which the wireless setup system 214 automatically determines the encryption type. Again, this determination can be made in reference to the information provided in the beacon signal. Because of such automatic determination, the user need not know, and therefore need not convey, what type of encryption the selected network uses. Once the type of encryption has been identified, the wireless setup system 214 can present an interface screen to the user for entry of a pass code based upon the identified encryption type, as indicated in block 420. In other words, the system 214 can present an interface that prompts the user to enter the particular type of encryption pass code that encryption systems of the type require. For example, if the network uses wired equivalency privacy (WEP) encryption, the system 214 can prompt the user to enter a WEP pass code. To cite another example, if the network uses Wi-Fi protected access (WPA) encryption, the system 214 can prompt the user to enter a WPA pass code. As is known in the art, each encryption may specify different pass code formats. For example, WEP encryption systems require either 5 alphanumeric characters or 10 hex characters for 40 bit encryption and 13 alphanumeric characters or 26 hex characters for 128-bit encryption, while WPA encryption systems require a passkey from 8 to 63 alphanumeric characters in length. Irrespective of the type of encryption used and the type of pass code that is required, the system 214 can presend a virtual keypad in the control panel display to facilitate entry of the pass code. In such a case, the user can, for example, navigate the virtual keys using the buttons of the device control panel.

Once the user enters his or her pass code and signals completion (e.g., by pressing an "enter" button or equivalent), the wireless setup system 214 receives the pass code, as indicated in block 422. At this point, the system 214 determines whether the pass code is in the correct format, as indicated in decision block 424. Specifically, because the system 214 automatically identified the encryption type and inherently "knows" the correct format for pass codes used in that type of encryption, the system can determine whether the entered pass code is compliant or non-compliant. If the pass code is not in the correct format (is non-compliant), flow continues to block 426 at which the system 214 notifies the user as to this fact and provides guidance to the user as to the correct pass code format. For example, the system 214 presents a screen in the control panel display that explains how many characters are required, what type of characters (e.g., alphanumeric or hex) are required, etc. The user can then be given an opportunity to re-enter the pass code with flow returning to block 420 described above. Operating in this manner, the wireless setup system 214 aids the user, who may not be experienced with wireless networks, in entering a valid pass code.

Assuming that the entered pass code is in the correct format (either on the first or a later try), flow continues to block 428 at which the user is prompted to confirm the selections that the user has made up to this point. For instance, the selected network identifier and the entered pass code are presented to the user in a screen of the control panel display for review prior to attempting connection. With reference next to decision block 430 of FIG. 4C, flow depends upon whether the settings are confirmed (i.e., accepted) by the user or not. If not, flow returns, in this embodiment, to block 406 of FIG. 4A at which the various located networks are again presented to the user for selection. Operating in this manner, the system 214 provides the user with the opportunity to change one or both of the selected network and entered pass code.

Assuming that the user does confirm the settings, flow continues to block 432 of FIG. 4C at which the wireless setup system 214 determines if a communication cable is connected to the printing device 102. This step is optional and its performance may depend upon whether the printing device is capable of connecting to a wireless network while still being connected to a wired (e.g., Ethernet) network. In cases in which this step is performed, flow from this point depends upon whether such a cable is or is not connected (decision block 434). If so, the user is prompted to unplug the cable from the printing device 102, as indicated in block 436, and the system 214 can check later (e.g., after the user indicates that the cable has been unplugged) to see if the cable is still connected (block 432). If no such cable is connected, however, flow continues down to block 438 at which the wireless setup system 214 initiates an attempt to connect the printing device 102 to the selected wireless network, as indicated in block 438.

The attempted connection to the wireless network may last from anywhere to a few seconds to a few minutes. Normally, if connection has not been achieved after a predetermined length of time, the connection attempt times out and failure is assumed. With reference to decision block 440, if connection is unsuccessful (i.e., connection is not achieved within the predetermined length of time), flow continues to block 442 at which the system 214 conveys an error condition to the user. By way of example, the failure can result due to the pass code (e.g., WEP key or WPA passkey) entered by the user being invalid for the given wireless network. In some embodiments, the error message can convey to the user that the entered pass code is incorrect in such a situation. As is noted above in relation to FIG. 3, such an error message informs the user, during the set up process, that the set up was not successful, for example because the selected settings are not correct. The user can then be provided with the opportunity to remedy the set up error during set up procedure, instead of the user only learning that set up was performed incorrectly when later trying to use the printing device 102 on the wireless network.

Flow next continues to decision block 444 of FIG. 4D at which the user is provided with the option to cancel the set up process. If the user does wish to cancel the process, flow continues to block 446 at which the top level wireless network menu is presented to the user and flow for the current session is terminated. If not, however, flow can return to block 428 of FIG. 4B so that the user can check the settings that the user selected during the set up process. In accordance with the flow described above, if the user does not confirm the settings (e.g., the user identifies an error), the user can be provided with an opportunity to re-select the wireless network and/or re-enter the pass code with flow returning to block 406 of FIG. 4A.

Returning to decision block 440 of FIG. 4C, if connection is successful, flow continues on to block 448 of the FIG. 4D at which the wireless setup system 214 conveys the success to the user. The success conveyed can be success in setting the printing device 102 up for use on the wireless network, which can, for example, be communicated with a signal strength graphic presented in the control panel display. In situations in which that signal strength is relatively weak, the system 214 can, optionally, recommend that the user position the printing device 102 closer to the access point to improve the signal strength.

With reference back to decision blocks 404 and 410 of FIG. 4A, if no wireless network was located during the scan (block 402) or if the user selected to enter a "new" wireless network that was not presented to the user for selection, flow continues to block 450 of FIG. 4D. At that block, the wireless setup system 214 presents an interface screen to the user for entry of a network identifier that identifies the wireless network to which the user would like to connect the printing device 102. By way of example, the user can enter the SSID of the network.

Once that entry is made, the system 214 receives the network identifier, as indicated in block 452. In some embodiments, the system 214 evaluates the entered network identifier. For example, the system 214 can evaluate the network identifier to determine whether it is unique. If the system 214 determines that the identifier is not unique, for instance the identifier comprises a common industry default such as "linsys", "dlink", or "hpsetup", the system can warn the user as to the security risk that the selected identifier poses and recommend that the user select a unique identifier.

At this point, the wireless setup system 214 scans for the network that the user entered, as indicated in block 454. Flow then continues to decision block 456 at FIG. 4E at which the system 214 determines whether the entered network was located in the scan. In some embodiments, the system 214 also evaluates the network identifier to determine whether there are duplicate access points within range that are broadcasting the identifier. In such a case, the system 214 can also warn the user as to potential difficulties that may arise in such a scenario (including potential security issues), and can recommend that the user select a different network identifier.

If the entered network was located in the scan, flow continues to block 412 of FIG. 4A at which the system 214 determines whether encryption is used in that network (see discussion above). If not, however, the user must manually describe the network to the system 214. To that end, the system 214 can prompt the user to select either an "infrastructure" or an "ad hoc" network configuration depending upon the specific configuration of the network to which the user would like to connect the printing device 102. The distinction between infrastructure and ad hoc is important from a pass code perspective and, more particularly, from the perspective of aiding the user with entering a pass code, given that the network configuration at issue dictates the types of encryption that may be used.

Once the user selection is entered, the system 214 receives the selection, as indicated in block 460, and the system can then prompt the user to select the encryption type for the network, if any encryption is used for that network, as indicated in block 462. The user response is then received, as indicated in block 464. Flow from this point depends upon whether encryption is used or not. If encryption is used, flow continues to 420 block of FIG. 4B at which the user is prompted to enter an appropriate pass code. If, on the other hand, encryption is not used (i.e., the user indicates this with his/her response), flow continues to block 428 of FIG. 4B at which the system 214 prompts the user to confirm the selected settings (i.e., the selected wireless network). Flow then continues in the manner described above depending upon the point in the flow to which is returned.

In some embodiments, set up of the printing device 102 can be wholly or partially automated for the user. For example, in cases in which the various settings and configuration information are contained in a file, for instance stored on a portable mass-storage device, it may be possible for the above-described set-up process to be automatically performed for the user. FIG. 5 illustrates operation of the wireless setup system 214 (FIG. 2) in such a case.

Beginning with block 500, the wireless setup system 214 detects connection of a storage device to the printing device 102 (FIG. 1). By way of example, the storage device comprises a portable, solid-state, mass-memory device, such as a flash drive or flash card. Once connection of the storage device is detected, the system 214 reads the storage device to determine whether it contains a configuration file that can be used to configure the printing device for use on a wireless network, as indicated in block 502. By way of example, such a file may comprise a WSETTING.WFC file that is formatted according to a standard developed by the Microsoft Corporation.

Referring to decision block 504, flow depends upon whether such a configuration file is contained in the storage device. If not, set up of the printing device 102 must be achieved another way, for instance using the process described in relation to FIGS. 4A-4E. If so, however, flow continues to block 504 at which the system 214 automatically configures the printing device 102 for wireless communication in accordance with the configuration settings specified in the configuration file. At that point, flow continues to block 438 of FIG. 4C at which connection to the wireless network is attempted.

## Claims

1. A method for setting up a peripheral device for use on a wireless network, the method comprising:
automatically identifying available wireless networks to a user to enable the user to select a network to which to connect the peripheral device (302);
automatically determining a type of encryption, if any, used on a selected wireless network (306);
prompting the user to enter an appropriate pass code that complies with the determined type of encryption (306); and
attempting to connect the peripheral device to the selected wireless network before the user exits the set up procedure (310).

2. The method of claim 1, wherein automatically identifying available wireless networks comprises scanning for wireless networks within range of the peripheral device (402) for beacon signals from the wireless networks within range.

3. The method of claim 1, wherein automatically identifying available wireless networks comprises presenting service set identifiers (SSIDs) to the user for selection.

4. The method of claim 1, further comprising receiving a pass code entered by the user (422) and automatically determining whether the entered pass code is in a correct format for the determined encryption type (424) before attempting to connect the peripheral device.

5. The method of claim 1, wherein automatically determining a type of encryption comprises automatically determining whether the encryption is one of wired equivalency privacy (WEP) encryption or Wi-Fi protected access (WPA) encryption (316).

6. The method of claim 5, further comprising recommending to the user to move the peripheral device closer to an access point if the signal strength is relatively weak.

7. The method of claim 1, further comprising notifying the user if the entered pass code is invalid.

8. The method of claim 1, further comprising receiving a network identifier entered by the user and evaluating the entered network identifier to determine if it is unique and warning the user if the identifier is not unique.

9. The method of claim 8, further comprising evaluating the entered network identifier to determine if it is being broadcast by more than one access point and, if so, warning the user of that situation.

10. The device of claim 9, wherein the wireless setup system is configured to automatically determine whether an entered pass code is in a correct format for the determined encryption type before attempting to connect the peripheral device to attempt to connect the peripheral device to the selected wireless network before the user exits a set up procedure.
